# EUROPÄISCHE PATENTANMELDUNG

(11) **EP 3 855 210 A1**
(43) Veröffentlichungstag der Anmeldung: **28.07.2021**
(21) Anmeldenummer: 21151061.5
(22) Anmeldetag: 12.01.2021
(51) Int. Cl.: G01S 7/481, G01S 17/42, G12B 5/00

(54) **OPTOELEKTRONISCHER SENSOR**

(30) Priorität: 21.01.2020 DE 102020101272
(71) Anmelder: SICK AG, 79183 Waldkirch (DE)
(72) Erfinder: Baumgartner, August, 79280 Au (DE); Hanselmann, Gabriel, 79369 Whyl (DE); Brucker, Frank, 77716 Haslach (DE)

(57) **Zusammenfassung**

Um eine Lagerung eines optoelektronischen Sensors (1) zuverlässig und preisgünstig dämpfend vorzusehen, wird ein optoelektronischer Sensor (1) zur Erfassung von Objekten in einem Überwachungsbereich bereitgestellt, umfassend eine Abtasteinheit (3) zur periodischen Abtastung des Überwachungsbereichs, wobei die Abtasteinheit (3) zumindest einen Lichtsender (3a), der Sendelicht (L) aussendet, und zumindest einen Lichtempfänger (3b), der von Objekten in dem Überwachungsbereich remittiertes Licht (rL) empfängt und zumindest ein Empfangssignal erzeugt, aufweist, einen Antrieb (4), der eine Rotation der Abtasteinheit (3) bewirkt, ein Gehäuse (2), das die Abtasteinheit (3) und den Antrieb (4) behaust, und eine Dämpfungslagereinheit (5), die den Antrieb (4) zusammen mit der rotierenden Abtasteinheit (3) derart mit dem Gehäuse (2) verbindet, dass der Antrieb (4) und die Abtasteinheit (3) schwingungs- und/oder schockisolierend von dem Gehäuse (2) entkoppelt sind.

## Beschreibung

Die Erfindung betrifft einen optoelektronischen Sensor zur Erfassung von Objekten in einem Überwachungsbereich gemäß den Merkmalen des Anspruchs 1.

Zur Überwachung eines Bereiches, ob sich in dem Bereich Objekte befinden oder nicht, werden bevorzugt Sensoren eingesetzt, die einen großen horizontalen Winkelbereich erfassen können. Hierzu eignen sich optoelektronische Sensoren und insbesondere Laserscanner.

In solch einem optoelektronischen Sensor überstreicht ein von einem Lichtsender, insbesondere einem Laser, erzeugtes und ausgesendetes Sendelicht vorzugsweise mit Hilfe einer Ablenkeinheit in Form eines Spiegels periodisch den Überwachungsbereich. Das Sendelicht wird an Objekten in dem Überwachungsbereich remittiert und in dem Sensor durch zumindest einem Lichtempfänger empfangen. Hieraus erzeugt der Lichtempfänger zumindest ein Empfangssignal. Basierend auf dem Empfangssignal ist ein Ort eines Objektes in dem Überwachungsbereich in zweidimensionalen Polarkoordinaten erfasst. Der Lichtsender und der Lichtempfänger sind als eine Abtasteinheit zusammengefasst, wobei ein Antrieb vorgesehen ist, der eine Rotation der Abtasteinheit bewirkt.

Ferner lassen sich die Positionen von Objekten ermitteln oder durch mehrere Abtastungen desselben Objekts an verschiedenen Stellen dessen Kontur bestimmen. Die dritte Raumkoordinate kann durch eine Relativbewegung in Querrichtung ebenfalls erfasst werden, beispielweise durch einen weiteren Bewegungsfreiheitsgrad der Ablenkeinheit in dem Sensor oder indem das Objekt relativ zu dem Sensor befördert wird. So können auch dreidimensionale Konturen ausgemessen werden.

Das Einsatzgebiet eines solchen optoelektronischen Sensors ist in den letzten Jahren immer vielfältiger geworden, so dass der optoelektronische Sensor auch zunehmend in Applikationen eingesetzt wird, bei denen extrem raue Randbedingungen vorherrschen. Die rauen Randbedingungen beinhalten beispielsweise Umwelteinflüsse, Schock und/oder Vibrationen. Die Randbedingungen können zum Teil so groß sein, dass der Sensor in seinem Betrieb temporär eingeschränkt ist oder gar ausfällt. Das heißt, beispielsweise können Schock oder Vibrationen die drehende Abtasteinheit des Sensors beschädigen oder zur Fehlmessung derselben führen.

Um den Sensor insbesondere vor Schock und/oder Vibrationen zu schützen, werden in der Regel externe, in einer Halterung integrierte Schwingungsdämpfer als Zubehörteil an dem Sensor angebracht, so dass über die Halterung der Sensor an seinem Betriebsort montiert werden kann.

Solch eine Ausbildung eines Sensorschutzes mittels der Halterung hat jedoch den Nachteil, dass applikationsbedingt unterschiedliche Halterungen notwendig werden, da die Halterung für den jeweiligen Sensor und/oder für die jeweilige Applikation ausgelegt sein muss. Dies erhöht einerseits den Aufwand für die Anbringung des Sensors und andererseits die Kosten für zusätzliche Bauteile und Auslegung des Sensors. Zusätzlich ist die Halterung den rauen Randbedingungen ausgesetzt, so dass eine Wartung der Halterung zu zusätzlichen Kosten und auch ein mögliches Versagen derselben zur Reduzierung der Verfügbarkeit des Sensors führen können.

Es ist eine Aufgabe der vorliegenden Erfindung, einen optoelektronischen Sensor zur Erfassung von Objekten in einem Überwachungsbereich derart zu verbessern, dass eine erhöhte Verfügbarkeit des Sensors im Betrieb gewährleistet ist.

Die Aufgabe wird erfindungsgemäß durch einen optoelektronischen Sensor mit den Merkmalen des Anspruchs 1 gelöst.

Hierbei umfasst der optoelektronische Sensor zur Erfassung von Objekten in einem Überwachungsbereich eine Abtasteinheit zur periodischen Abtastung des Überwachungsbereichs, wobei die Abtasteinheit zumindest einen Lichtsender, der Sendelicht aussendet, und zumindest einen Lichtempfänger, der von Objekten in dem Überwachungsbereich remittiertes Licht empfängt und zumindest ein Empfangssignal erzeugt, aufweist. Der Sensor umfasst ferner einen Antrieb, der eine Rotation der Abtasteinheit bewirkt, ein Gehäuse, das die Abtasteinheit und den Antrieb behaust, und eine Dämpfungslagereinheit, wobei die Dämpfungslagereinheit den Antrieb zusammen mit der rotierenden Abtasteinheit derart mit dem Gehäuse verbindet, dass der Antrieb und die Abtasteinheit schwingungs- und/oder schockisolierend vom Gehäuse entkoppelt sind.

Hieraus ergibt sich der Vorteil, dass die Schwingungen und/oder Schocks, die auf das Gehäuse wirken, sich nicht auf die Abtasteinheit übertragen, so dass der Sensor zu jeder Zeit den Überwachungsbereich präzise abtastet. Weiterhin ist die Dämpfungslagereinheit vorteilhafterweise innerhalb des Gehäuses angeordnet, so dass die Dämpfungslagereinheit sicher vor Witterungseinflüssen geschützt ist. Dadurch ist eine Lebensdauer des Sensors erheblich gesteigert.

Gemäß einem bevorzugten Ausführungsbeispiel weist die Dämpfungslagereinheit aktive und/oder passive Dämpfungselemente auf, die Schwingungs- und/oder Schockbewegungen des Gehäuses gegenüber dem Antrieb neutralisieren. Hierdurch ist die Dämpfungslagereinheit einfach und kostengünstig aufgebaut, so dass der Sensor insgesamt preisgünstig in der Herstellung sein kann.

Weiterhin umfassen gemäß einem bevorzugten Ausführungsbeispiel die aktiven Dämpfungselemente elektromagnetische Aktoren und/oder Piezomotoren, die preisgünstig in der Beschaffung sind und mit ihrer Größe vorteilhaft in das Gehäuse bzw. in den Sensor einbaubar sind.

Gemäß einem weiteren bevorzugten Ausführungsbeispiel umfassen die passiven Dämpfungselemente Gewindebuchsen zur Schraubverbindung des Dämpfungselements mit dem Antrieb und dem Gehäuse, wobei die Gewindebuchsen in schwingungs- und/oder schockdämpfendes, insbesondere gummielastisches, Material integriert sind. Die Gewindebuchsen selbst bestehen hierbei aus Metall. Die passiven Dämpfungselemente umfassen gemäß einem weiteren bevorzugten Ausführungsbeispiel Gasdämpfer, die sehr einfach und preisgünstig hergestellt sein können.

Vorteilhafterweise ist die Dämpfungslagereinheit ausgebildet, die Entkopplung zwischen dem Gehäuse und dem Antrieb mit der Abtasteinheit in alle drei Raumrichtungen auszuüben. Hierdurch ist die Abtasteinheit des Sensors vor sämtlichen Schwingungen und/oder Schocks geschützt, die von dem Gehäuse ausgehen können und sich auf die Abtasteinheit übertragen könnten.

Insbesondere sind der Antrieb und die Abtasteinheit auf einer Antriebsgrundplatte angeordnet, wobei vorzugsweise die Antriebsgrundplatte über die Dämpfungslagereinheit mit dem Gehäuse in Verbindung steht. Das heißt, die Abtasteinheit ist durch eine Welle des Antriebs, die Antriebsgrundplatte und die Dämpfungslagereinheit von dem Gehäuse entkoppelt, so dass eine Übertragung von Schwingungen und Schocks von dem Gehäuse auf die Abtasteinheit stark minimiert ist.

Der erfindungsgemäße optoelektronische Sensor kann auf ähnliche Weise durch weitere Merkmale ausgestaltet werden und zeigt dabei ähnliche Vorteile. Derartige weitere Merkmale sind beispielhaft, aber nicht abschließend in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügten Zeichnungen anhand von Ausführungsbeispielen erläutert. Die Figur der Zeichnungen zeigt in:
- Fig. 1: eine schematische Darstellung eines Grundaufbaus eines erfindungsgemäßen optoelektronischen Sensors, und
- Fig. 2: eine schematische Detaildarstellung eines Ausführungsbeispiels einer erfindungsgemäßen Dämpfungslagereinheit.

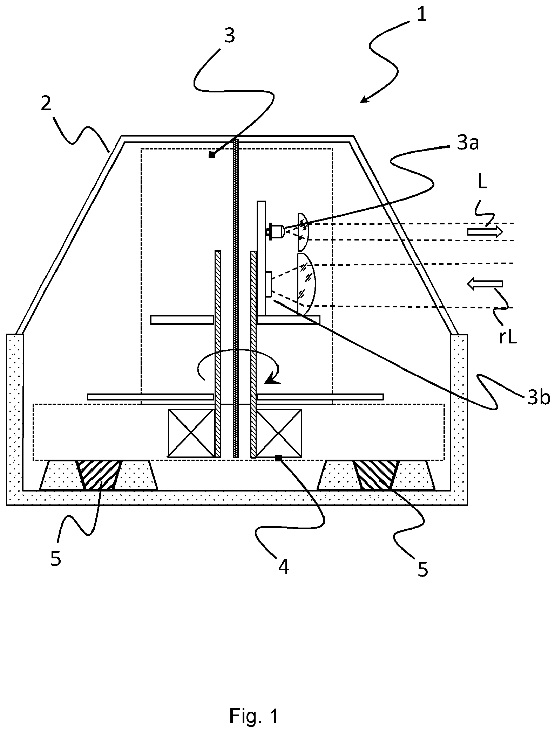

In der Figur 1 ist eine schematische Darstellung eines Ausführungsbeispiels eines Grundaufbaus eines erfindungsgemäßen optoelektronischen Sensors 1 gezeigt, der ein Überwachungsbereich abtastet und Objekten in dem Überwachungsbereich erfasst.

Der optoelektronische Sensor 1, der insbesondere ein Laserscanner bzw. ein sogenannter LIDAR (Light Detection And Ranging) Scanner sein kann, weist ein Gehäuse 2 auf, das an einem stationären oder mobilen Einsatzort des optoelektronischen Sensors 1 montiert ist. Der stationäre Einsatzort kann ein Haus oder eine Automatisierungsanlage sein, wobei der optoelektronische Sensor 1 beispielsweise einen Eingangsbereich zu dem Haus bzw. zu der Automatisierungsanlage überwacht. Der mobile Einsatzort kann beispielsweise ein Fahrzeug, insbesondere ein autonomes Fahrzeug, sein, das mit Hilfe des optoelektronischen Sensors 1 seine Fahrspur überwacht.

Das Gehäuse 2 behaust eine Abtasteinheit 3, die als eine rotierende Einheit ausgebildet ist. Die Abtasteinheit 3 weist zumindest einen Lichtsender 3a und zumindest einem Lichtempfänger 3b auf. Der Lichtsender 3a sendet periodisch Sendelicht L in Richtung des nicht dargestellten Überwachungsbereichs aus, wobei das ausgesendete Sendelicht L schematisch in Form eines Pfeils dargestellt ist. Trifft das ausgesendete Sendelicht im Überwachungsbereich auf ein nicht dargestelltes Objekt, so wird vom Objekt entsprechendes Licht rL remittiert. Das remittierte Licht rL, in Form eines zu dem anderen Pfeil entgegen gerichteten Pfeils schematisch dargestellt, wird von dem Lichtempfänger 3b empfangen bzw. erfasst, wobei zumindest ein Empfangssignal aus dem erfassten remittierten Licht rL erzeugt wird. Mittels des Empfangssignals kann das Objekt in dem Überwachungsbereich erfasst werden.

Die Abtasteinheit 3 ist mit einem Antrieb 4 verbunden, der eine Rotation der Abtasteinheit 3 bewirkt. Auf diese Weise ist dem optoelektronischen Sensor 1 ermöglicht, den Überwachungsbereich periodisch abzutasten.

Erfindungsgemäß ist eine Dämpfungslagereinheit 5 vorgesehen, die den Antrieb 4 zusammen mit der rotierenden Abtasteinheit 3 derart mit dem Gehäuse 2 verbindet, dass der Antrieb 4 und die Abtasteinheit 3 schwingungs- und/oder schockisolierend von dem Gehäuse 2 entkoppelt sind.

Das heißt mit anderen Worten, Schwingungen und/oder Schocks, die während eines Betriebs des optoelektronischen Sensors 1 auf das Gehäuse 2 wirken, können nicht auf den Antrieb 4 und die Abtasteinheit 3 übertragen werden. Dadurch ist die Abtasteinheit 3 störungsunempfindlicher im Betrieb und eine Verfügbarkeit des optoelektronischen Sensors 1 ist erhöht.

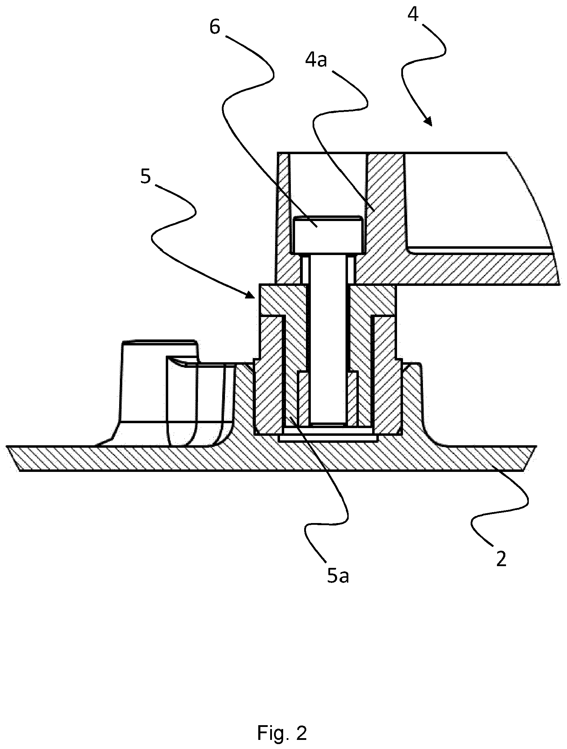

Wie in der Figur 2 als schematische Detaildarstellung der Dämpfungslagereinheit 5 dargestellt, weist die Dämpfungslagereinheit 5 ein passives Dämpfungselement 5a auf, das Schwingungs- und/oder Schockbewegungen des Gehäuses 2 gegenüber dem Antrieb 4 neutralisiert. Das gezeigte passive Dämpfungselement 5a besteht bei dem dargestellten bevorzugten Ausführungsbeispiel aus einer Gewindebuchse, die in schwingungs- und/oder schockdämpfendes, insbesondere gummielastisches, Material integriert ist. Das heißt, die Gewindebuchse ist durch das schwingungs- und/oder schockdämpfende Material eingebettet.

Mittels einer Schraube 6 ist der Antrieb 4 an die Gewindebuchse verschraubt, die wiederum mit dem Gehäuse 2 fest verbunden ist. Hierdurch ist der Antrieb 4 zwar mit dem Gehäuse 2 festverbunden, doch der Antrieb 4 und das Gehäuse 2 sind durch das passive Dämpfungselement 5a voneinander schwingungs- und/oder schockisoliert.

Vorteilhafterweise sind der Antrieb 4 und die Abtasteinheit 3 auf einer Antriebsgrundplatte 4a des Antriebs 4 angeordnet, so dass insbesondere die Antriebsgrundplatte 4a über die Dämpfungslagereinheit 5 mit dem Gehäuse 2 in Verbindung steht. Dadurch ist eine weitere Entkopplung der Abtasteinheit 3 von dem Gehäuse 2 vorgesehen, so dass die Schwingungs- und/oder Schockisolierung der Abtasteinheit 3 von dem Gehäuse 2 gesteigert werden kann.

Ferner ist die Dämpfungslagereinheit 5 vorzugsweise ausgebildet, die Entkopplung zwischen dem Gehäuse 2 und dem Antrieb 4 mit der Abtasteinheit 3 in alle drei Raumrichtungen auszuüben. Dies bedeutet, dass sämtliche Schwingungen und/oder Schocks, die vom Gehäuse 2 aus der x-, y- oder z-Richtung auf die Dämpfungslagereinheit 5 einwirken, durch das Dämpfungselement 5a neutralisiert werden.

Hierbei kann das passive Dämpfungselement 5a insbesondere auch einen Gasdämpfer umfassen, der beispielsweise an einem Ende mit der Antriebsgrundplatte 4a und an dem anderen Ende mit dem Gehäuse 2 verbunden ist.

Dadurch, dass die Dämpfungslagereinheit 5 innerhalb des Gehäuses 2 untergebracht ist, ist die Dämpfungslagereinheit 5 gegenüber äußere Witterungseinflüsse, wie beispielweise Regen, Hitze usw., geschützt, die an dem Einsatzort des optoelektronischen Sensors 1 herrschen. Eine einsatzbedingte Abnutzung der Dämpfungslagereinheit 5 ist minimiert. Ferner würden Wartungskosten für die Dämpfungslagereinheit 5 entfallen, so dass der Betrieb des optoelektronischen Sensors 1 kostenreduziert durchgeführt werden kann.

Außerdem kann die Dämpfungslagereinheit 5 klein und günstig ausgebildet werden, da die Dämpfungslagereinheit 5 nur die rotierenden Einheiten vom Gehäuse 2 entkoppelt und nicht den vollständigen optoelektronischen Sensor 1 an sich. Zusätzlich führt die Entkopplung des Antriebs 4 vom Gehäuse 2 zu einer Reduzierung von Geräusch- und Vibrationsemissionen, welche üblicherweise durch den Antrieb 4 erzeugt und durch das Gehäuse 2 verstärkt werden. Der optoelektronische Sensor 1 wird dadurch im Betrieb leiser und laufruhiger.

Gemäß einem nicht dargestellten Ausführungsbeispiel kann die Dämpfungslagereinheit 5 auch aktive Dämpfungselemente aufweisen, die beispielsweise elektromagnetische Aktoren und/oder Piezomotoren umfassen. Die Schwingungen und/oder Schocks, die auf das Gehäuse 2 wirken und erfasst werden, werden den elektromagnetischen Aktoren und/oder Piezomotoren übermittelt, so dass die aktiven Dämpfungselemente bzw. Aktoren und/oder Piezomotoren die erfassten Schwingungen und/oder Schocks neutralisieren können.

Die Schwingungs- und/oder Schockentkopplung der Abtasteinheit 3 von dem Gehäuse 2 ist durch die aktiven Dämpfungselemente stärker als bei den passiven Dämpfungselementen ausgeprägt.

### Bezugszeichenliste

- 1: Optoelektronischer Sensor
- 2: Gehäuse
- 3: Abtasteinheit
- 3a: Lichtsender
- 3b: Lichtempfänger
- 4: Antrieb
- 4a: Antriebsgrundplatte
- 5: Dämpfungslagereinheit
- 5a: Dämpfungselement
- 6: Schraube

- L: Sendelicht
- rL: Remittiertes Licht

## Patentansprüche

1. Optoelektronischer Sensor (1) zur Erfassung von Objekten in einem Überwachungsbereich, umfassend:
- eine Abtasteinheit (3) zur periodischen Abtastung des Überwachungsbereichs, wobei die Abtasteinheit (3) zumindest einen Lichtsender (3a), der Sendelicht (L) aussendet, und zumindest einen Lichtempfänger (3b), der von Objekten in dem Überwachungsbereich remittiertes Licht (rL) empfängt und zumindest ein Empfangssignal erzeugt, aufweist,
- einen Antrieb (4), der eine Rotation der Abtasteinheit (3) bewirkt,
- ein Gehäuse (2), das die Abtasteinheit (3) und den Antrieb (4) behaust, und
- eine Dämpfungslagereinheit (5), die den Antrieb (4) zusammen mit der rotierenden Abtasteinheit (3) derart mit dem Gehäuse (2) verbindet, dass der Antrieb (4) und die Abtasteinheit (3) schwingungs- und/oder schockisolierend von dem Gehäuse (2) entkoppelt sind.

2. Optoelektronischer Sensor (1) nach Anspruch 1, wobei die Dämpfungslagereinheit (5) aktive und/oder passive Dämpfungselemente (5a) aufweist, die Schwingungs- oder Schockbewegungen des Gehäuses (2) gegenüber dem Antrieb (4) neutralisieren.

3. Optoelektronischer Sensor (1) nach Anspruch 2, wobei die aktiven Dämpfungselemente elektromagnetische Aktoren und/oder Piezomotoren umfassen.

4. Optoelektronischer Sensor (1) nach Anspruch 2, wobei die passiven Dämpfungselemente (5a) Gewindebuchsen zur Schraubverbindung des Dämpfungselements (5a) mit dem Antrieb (4) und dem Gehäuse (2) umfassen, wobei die Gewindebuchsen in schwingungs- und/oder schockdämpfendes, insbesondere gummielastisches, Material integriert sind.

5. Optoelektronischer Sensor (1) nach zumindest einem der vorhergehenden Ansprüche 2 bis 4, wobei die passiven Dämpfungselemente (5a) Gasdämpfer umfassen.

6. Optoelektronischer Sensor (1) nach einem der vorhergehenden Ansprüche 1 bis 5, wobei die Dämpfungslagereinheit (5) ausgebildet ist, die Entkopplung zwischen dem Gehäuse (2) und dem Antrieb (4) mit der Abtasteinheit (3) in alle drei Raumrichtungen auszuüben.

7. Optoelektronischer Sensor (1) nach einem der vorhergehenden Ansprüche 1 bis 6, wobei der Antrieb (4) und die Abtasteinheit (3) auf einer Antriebsgrundplatte (4a) angeordnet sind.

8. Optoelektronischer Sensor (1) nach Anspruch 7, wobei die Antriebsgrundplatte (4a) über die Dämpfungslagereinheit (5) mit dem Gehäuse (2) in Verbindung steht.
